# EUROPÄISCHE PATENTSCHRIFT

(11) **EP 2 935 019 B1**
(45) Veröffentlichungstag und Bekanntmachung des Hinweises auf die Patenterteilung: **18.10.2017**
(21) Anmeldenummer: 13818718.2
(22) Anmeldetag: 17.12.2013
(51) Int. Cl.: B31B 50/22, B65B 43/56, B65B 43/58, B65B 43/50, B65B 43/52, B65B 3/02, B65B 43/48

(54) **VERFAHREN UND VORRICHTUNG ZUR FÖRDERUNG VON STÜCKGÜTERN IN EINER ABFÜLLMASCHINE**
METHOD AND DEVICE FOR TRANSFERING CARTONS IN A FILLING MACHINE
PROCEDE ET DISPOSITIF POUR LA TRANSFERER DES CARTONS DANS UNE MACHINE DE REMPLISSAGE

(30) Priorität: 20.12.2012 DE 102012112792
(43) Veröffentlichungstag der Anmeldung: 28.10.2015
(73) Patentinhaber: Elopak AS, 3431 Spikkestad (NO)
(72) Erfinder: BALTES, Klaus, 50127 Bergheim (DE)
(74) Vertreter: Kohlmann, Kai
(86) Internationale Anmeldenummer: PCT/EP2013/076994
(87) Internationale Veröffentlichungsnummer: WO 2014/095934

(56) Entgegenhaltungen:
- EP-A1- 0 079 561
- US-A- 3 486 423
- US-A- 4 548 244
- US-A- 4 566 251
- US-A- 4 588 391

## Beschreibung

Die Erfindung betrifft ein Verfahren zum getakteten Fördern von Stückgütern in einer Abfüllmaschine für fließfähige Produkte entlang einer Förderstrecke mit einem ersten und einem zweiten Abschnitt, umfassend die Schritte Fördern der Stückguter in dem ersten Abschnitt mit einem ersten Fördermittel und Fördern der Stückguter in dem zweiten Abschnitt mit einem zweiten Fördermittel, Entladen der Stückgüter von dem ersten Fördermittel und Beladen des zweiten Fördemittels mit den Stückgütern. Außerdem betrifft die Erfindung eine Vorrichtung zum getakteten Fördern von Stückgütern in einer Abfüllmaschine für fließfähige Produkte entlang mindestens einer Förderstrecke mit einem ersten und einem zweiten Abschnitt, umfassend ein erstes Fördermittel mit einem getakteten Antrieb zum Fördern der Stückguter in dem ersten Abschnitt und ein zweites Fördermittel mit einem getakteten Antrieb zum Fördern der Stückguter in dem zweiten Abschnitt.

Abfüllmaschinen zur Abfüllung fließfähiger Produkte, insbesondere flüssiger Lebensmittel, in aus Kartonverbundmaterial bestehende Packungsbehälter sind aus dem Stand der Technik bekannt. Zum Aufbau einer Abfüllmaschine wird beispielsweise auf die DE 41 42 167 C2 hingewiesen.

In einer Abfüllmaschine wird ein aufgefalteter Packungsmantel in einem ersten Abschnitt einer Förderstrecke von einem ersten Fördermittel aufgenommen. Das erste Fördermittel ist üblicherweise als sich schrittweise drehendes Dornrad ausgebildet, das mehrere sich radial nach außen erstreckende Dorne aufweist, die in die aufgefalteten Packungsmäntel eingreifen. Während eines Stillstandsintervalls des getaktet betriebenen Dornrades wird an den freien Enden der Packungsmäntel ein Arbeitsschritt durchgeführt. Insbesondere wird mit Hilfe von Falt- und Presswerkzeugen ein Packungsboden hergestellt, so dass aus dem Packungsmantel ein halboffener Packungsbehälter entsteht. Sobald der den halboffenen Packungsbehälter tragende Dorn senkrecht nach unten weist, wird der Packungsbehälter mit Hilfe eines Abstreifers von dem Dornrad entladen und gleitet dabei in eine fluchtend zu dem Dorn ausgerichtete Zelle eines zweiten, insbesondere als Gliederbandförderer ausgestalteten Fördermittels. Der nach oben offene Packungsbehälter steht aufrecht in der Zelle und wird beispielsweise durch einen Sterilraum der Füllmaschine gefördert, in welchem sich eine Abfüllstation für die fließfähigen Produkte befindet. Während eines Stillstandsintervalls des getaktet betriebenen zweiten Fördermittels wird ein weiterer Arbeitsschritt ausgeführt, insbesondere werden die Packungsbehälter abgefüllt.

Das erste und zweite Fördermittel werden mit übereinstimmender Taktung betrieben. Dabei richtet sich die Taktzeit nach dem zeitaufwendigsten Arbeitsschritt entlang der Förderstrecke. Dies ist bei bekannten Füllmaschinen das Abfüllen des fließfähigen Produktes in die Packungsbehälter. Beim Abfüllen muss eine Schaumbildung und/oder eine zu große Beschleunigung, die zu einem Schwappen des abgefüllten Produktes in dem Packungsbehälter führt, durch eine ausreichend lange Taktzeit vermieden werden. In keinem Fall darf Schaum oder fließfähiges Produkt auf die Innenflächen des oberen Randes des Packungsbehälters gelangen, da diese Flächen im nächsten Arbeitsschritt zur Bildung des Packungskopfes flüssigkeitsfrei zu halten sind, um ein einwandfreies Verschließen durch Aufheizen und Verpressen zu ermöglichen.

Die benötigte Zeit für jeden Abfüllvorgang überschreitet die für die Herstellung jedes Packungsbodens erforderliche Zeit.

Wegen der Übergabe des halboffenen Packungsbehälters von dem Dornrad an den Gliederbandförderer muss jedoch die Taktung von Dornrad und Gliederbandförderer übereinstimmen. Dies hat zur Folge, dass die Taktzeit der Taktung des Dornrades zu lang und die Taktzeit für die Taktung des Gliederbandförderers am unteren Rand des technisch vertretbaren Zeitfensters bemessen wird, um einen möglichst hohen Durchsatz der Füllmaschine zu gewährleisten.

Die US 4,588,391 A offenbart eine Übertragungseinrichtung für eine Füllmaschine, die zwischen einem Dornrad und einem in einer horizontalen Ebene laufenden Hauptförderer angeordnet ist. Entlang der Förderstrecke des Dornrades wird ein Karton geformt, der durch eine oberhalb des Hauptförderers angeordnete Füllstation befüllt wird. Die Übertragungseinrichtung umfasst einen Übertragungsförderer mit mehreren Taschen, die die Kartons reibschlüssig entgegen der Schwerkraft halten sowie einen Abstreifmechanismus, um von einem in Richtung des Übertragungsförderers weisenden Dorn einen Karton an den Übertragungsförderer und zwei Kartons von dem Übertragungsförderer an den Hauptförderer zu übergeben. Der Hauptförderer, das Dornrad und der Übertragungsförderer werden synchron betrieben, wobei der Hauptförderer gegenüber dem Dornrad und dem Übertragungsförderer mit halber Taktzahl betrieben wird. Im ersten Takt des Dornrades wird ein Karton von dem Dornrad an den Übertragungsförderer übergeben während eines Stillstandes des Dornrades und des Übertragungsförderers bei sich bewegendem Hauptförderer. Im zweiten Takt des Dornrades wird ein Karton von dem Dornrad an den Übertragungsförderer und gleichzeitig werden zwei Kartons von dem Übertragungsförderer an den Hauptförderer übergeben während eines Stillstandes des Dornrades, des Übertragungsförderers und des Hauptförderers.

Aus der EP 0 079 561 A1 ist eine Fördervorrichtung zum getakteten Fördern von Kartons in einer Füllmaschine bekannt, die ein Dornrad, einem in einer horizontalen Ebene laufenden Hauptförderer und eine Abstreifeinrichtung umfasst. Entlang der Förderstrecke des Dornrades wird ein Karton geformt, der durch eine oberhalb des Hauptförderers angeordnete Füllstation befüllt wird. Die Abstreifeinrichtung dient zum Abstreifen der Kartons von den Dornen auf eine Positioniereinrichtung. Die in Verlängerung der Förderstrecke vor dem Hauptförderer angeordnete Positioniereinrichtung weist eine Schiene auf, zum sequentiellen Positionieren jedes abgestreiften Kartons auf dem Hauptförderer, und einen Schieber, der den positionierten Karton in den Hauptförderer schiebt. Im Betrieb wird das Dornrad zu zwei Stillstandsintervallen veranlasst, während der mit halber Taktzahl betriebene Hauptförderer lediglich ein Stillstandsintervall hat. Die Abstreifeinrichtung und der Schieber arbeiten im Takt des Dornrades. Auf den Hauptförderer wird je Arbeitstakt des Hauptförderers ein positionierter Karton während des Stillstandsintervalls des Hauptförderers und ein positionierter Karton während des Förderintervalls des Hauptförderers aufgeschoben.

Die Stillstandszeit des Hauptförderers entspricht bei den Lösungen nach der US 4,588,391 A und der EP 0 079 561 A1 stets der des Dornrades, so dass trotz Anpassung des Hauptförderers an die doppelte Taktzahl des Dornrades nur ein relativ kurzes Zeitfenster zum Befüllen der Kartons zur Verfügung steht.

Schließlich ist aus der US 2008/0010954 A1 ein System zum Verpacken von rechteckig geformten Packungseinheiten in rechteckige geformte Verpackungskartons bekannt, umfassend eine erste Förderstrecke für die Packungseinheiten, eine Förderstrecke für die leeren Verpackungskartons und eine Entladestrecke für die gefüllten Verpackungskartons sowie einen Greifer zum Erfassen einer Gruppe von Packungseinheiten von einem Abholteil und Platzieren der Gruppe von Packungseinheiten in dem Verpackungskarton, der sich an einem Füllort der Entladestrecke befindet. Das Abholteil besteht wenigstens teilweise aus einem Fördertisch, der separat von der ersten Förderstrecke in deren Verlängerung angeordnet ist. Dem Abholteil werden die Packungseinheiten einzeln nacheinander von der ersten Förderstrecke zugeführt, bis die Gruppe von beispielsweise drei Packungseinheiten auf dem Abholteil vollzählig ist, die sodann mit dem Greifer erfasst wird. Sobald die Gruppe vollzählig ist, wird der weitere Zustrom von Packungseinheiten von der ersten Förderstrecke mittels eines Stoppers unterbunden.

Ausgehend von diesem Stand der Technik liegt der Erfindung die Aufgabe zu Grunde, ein Verfahren vorzuschlagen, bei dem die Taktzeit für kritische Bearbeitungsschritte in einem zweiten Abschnitt der Förderstrecke, insbesondere für das Abfüllen fließfähiger Produkte in die Packungsbehälter, ausreichend bemessen wird, ohne unnötige Totzeiten für die Durchführung eines Bearbeitungsschrittes in dem ersten Abschnitt der Förderstrecke in Kauf nehmen zu müssen. Außerdem soll eine Vorrichtung zur Durchführung des Verfahrens angegeben werden.

Die Lösung dieser Aufgabe basiert auf dem Gedanken, dass erste Fördermittel in dem ersten Abschnitt der Förderstrecke und das zweite Fördermittel in dem zweiten Abschnitt der Förderstrecke mit unterschiedlichen Taktungen zu betreiben, wobei eine zwischen dem ersten und dem zweiten Abschnitt der Förderstrecke angeordnete Handhabungseinrichtung die unterschiedlichen Taktzeiten zwischen dem ersten und zweiten Fördermittel ausgleicht.

Im Einzelnen wird die Aufgabe bei einem Verfahren der eingangs erwähnten Art durch die nachfolgenden weiteren Schritte gelöst:
- Betreiben des ersten Fördermittels mit einer ersten Taktung, deren Takte jeweils ein Stillstandsintervall und ein Förderintervall umfassen,
- Betreiben des zweiten Fördermittels mit einer von der ersten Taktung abweichenden zweiten Taktung, deren Takte jeweils ein Stillstandsintervall und ein Förderintervall umfassen, wobei sich jedes Stillstandsintervall der zweiten Taktung mit mindestens zwei Stillstandsintervallen der ersten Taktung zeitlich überschneidet,
- Entladen jeweils eines der Stückgüter von dem ersten Fördermittel während eines Stillstandsintervalls der ersten Taktung mittels einer zwischen dem ersten und dem zweiten Abschnitt der Förderstrecke angeordneten Handhabungseinrichtung und
- Beladen des zweiten Fördemittels während eines Stillstandsintervalls der zweiten Taktung mit sämtlichen während dieses Stillstandsintervalls von dem ersten Fördermittel entladenen Stückgütern mittels der Handhabungseinrichtung.

Eine Vorrichtung zur Durchführung des Verfahrens ergibt sich aus den Merkmalen des Anspruchs 8.

In dem ersten Abschnitt der Förderstrecke wird ein Bearbeitungsschritt an jedem Stückgut, insbesondere Packungsmantel, je Takt durchgeführt. In dem zweiten Abschnitt der Förderstrecke wird indes gleichzeitig an mindestens zwei Stückgütern, insbesondere Packungsbehältern, ein übereinstimmender Bearbeitungsschritt je Takt durchgeführt.

Die Taktung des zweiten Fördermittels wird derart bestimmt, dass sich jedes Stillstandsintervall der zweiten Taktung mit mindestens zwei Stillstandsintervallen der ersten Taktung zeitlich überschneidet. Hierdurch ist es möglich, während eines Stillstandsintervalls der ersten Taktung mindestens zwei Packungsbehälter von dem ersten Fördermittel zu entladen, die anschließend für die Durchführung des übereinstimmenden Bearbeitungsschrittes, insbesondere das gleichzeitige Abfüllen der beiden Packungsbehälter während eines Stillstandsintervalls der zweiten Taktung in dem zweiten Abschnitt der Förderstrecke zur Verfügung stehen. Vorzugsweise beträgt die Dauer der Takte der zweiten Taktung ein ganzzahliges Vielfaches der Dauer der Takte der ersten Taktung. Hierdurch lassen sich die Stillstands- und Förderintervalle des ersten und zweiten Fördermittels einfach synchronisieren.

Für das Abfüllen der Packungsbehälter ist es vorteilhaft, wenn das Beladen des zweiten Fördermittels mit den Stückgütern, insbesondere den halboffenen Packungsbehältern, an mehreren in Richtung der Förderstrecke versetzt zueinander angeordneten Absetzpositionen erfolgt. Die Packungsbehälter befinden sich dann bereits in einer Anordnung auf dem zweiten Fördermittel, die für ein automatisiertes Abfüllen der halboffenen Packungsbehälter geeignet ist.

Um kurze Transportwege für die Stückgüter und eine hohe Entlade- und Beladegeschwindigkeit mittels der Handhabungseinrichtung zu gewährleisten, erfolgt das Entladen jeweils eines der Stückgüter von dem ersten Fördermittel in einer Entladeposition, die sich zwischen zwei Absetzpositionen auf dem zweiten Fördermittel befindet. Jedes Stückgut wird nach dem Entladen von dem ersten Fördermittel und vor dem Beladen des zweiten Fördermittels aus dieser Entladeposition in Richtung einer der Absetzpositionen transportiert.

Erfindungsgemäß ist es vorteilhaft, wenn sowohl der erste als auch der zweite Abschnitt der Förderstrecke, die Absetzpositionen auf dem zweiten Fördermittel sowie die Entladeposition, die sich zwischen zwei Absetzpositionen befindet, sämtlich in einer gemeinsamen Vertikalebene liegen. Hierdurch wird die für das Fördern benötigte Grundfläche und daraus folgend die erforderliche Stellfläche einer Abfüllmaschine mit einer Vorrichtung zum getakteten Fördern von Stückgütern so klein wie möglich gehalten. Abweichend hiervon benötigen Förderer mit Förderstrecken, die teilweise in horizontalen Ebenen und teilweise in Vertikalebenen verlaufen, erheblich mehr Grund- und Stellfläche. Insbesondere Abfüllmaschinen mit mehreren Förderstrecken lassen sich mit in horizontalen Ebenen verlaufenden Förderstrecken kaum realisieren.

Indem jedes Stückgut nach dem Entladen von dem ersten Fördermittel und vor dem Beladen des zweiten Fördermittels um eine Längsachse des Stückgutes gedreht wird, lässt sich dieses in der Handhabungseinrichtung für nachfolgende Bearbeitungsschritte ausrichten. Insbesondere für die Bildung des Packungskopfes eines Packungsbehälters ist es vorteilhaft, wenn die zu verschweißenden Giebellaschen des Packungskopfes in Richtung der Förderstrecke ausgerichtet sind. Die zum Verschweißen erforderlichen Schweißbacken sind parallel zur Förderstrecke angeordnet und behindern den Transport der Packungsbehälter nicht. Im Interesse einer hohen Ent- und Beladegeschwindigkeit mittels der Handhabungseinrichtung wird jedes Stückgut vorzugsweise während des Transports aus der Entladeposition in eine der Absetzpositionen verdreht.

Um den Durchsatz der Abfüllmaschine zu erhöhen, werden die Stückgüter in der Abfüllmaschine entlang mehrerer, parallel zueinander angeordneter Förderstrecken getaktet gefördert, wobei die Anordnung und Taktung der ersten und zweiten Fördermittel und die Anordnung jeder Handhabungseinrichtung in sämtlichen Förderstrecken übereinstimmt. Die Antriebe der ersten und zweiten Fördermittel lassen sich durch die parallele Anordnung und - Taktung zusammenfassen. Auf einer Welle können beispielsweise mehrere Transporträder über einen Antrieb in Drehbewegung versetzt werden. In gleicher Weise können die in einer Reihe in Richtung der Förderstrecke nebeneinander angeordneten Aufnahmen jedes zweiten Fördermittels auf einem gemeinsamen Gliederband eines Gliederbandförderers angeordnet sein. Zwischen den ersten und zweiten Abschnitten der parallel zueinander angeordneten Förderstrecken kann eine einzige Handhabungseinrichtung zum Ent- und Beladen der Stückgüter angeordnet sein. Alternativ ist eine Handhabungseinrichtung lediglich einer Teilmenge der parallel zueinander angeordneten Förderstrecken zugeordnet.

Eine bevorzugte Handhabungseinrichtung zwischen dem ersten und zweiten Abschnitt der Förderstrecke weist Mittel zum Entladen der Stückgüter von dem ersten Fördermittel in eine Entladeposition, Mittel zum Transport der Stückgüter aus der Entladeposition in Richtung der Absetzpositionen und Mittel zum Beladen des zweiten Fördermittels mit den Stückgütern an den Absetzpositionen auf. Die Entladeposition befindet sich im Abstand zu den in Richtung der Förderstrecke versetzt zueinander angeordneten Absetzpositionen für die Stückgüter auf dem zweiten Fördermittel. Vorzugsweise befindet sich die Entladeposition zwischen zwei in Richtung der Förderstrecke versetzt zueinander angeordneten Absetzpositionen, um die Transportwege zu den Absetzpositionen kurz zu halten.

Sofern das erste Fördermittel ein Transportrad umfasst, das mehrere sich radial nach außen erstreckende parallele Aufnahmen für jeweils eines der Stückgüter aufweist, ist das Mittel zum Entladen der Handhabungseinrichtung vorzugsweise als Abstreifer ausgestaltet, der an einer Kante und/oder Oberfläche des Stückgutes zur Anlage bringbar ist. Mittels des Abstreifers lässt sich der halboffene Packungsbehälter von den radialen Aufnahmen in eine Entladeposition verschieben.

Sofern das zweite Fördermittel einen umlaufenden Gliederbandförderer umfasst, der in Richtung der Förderstrecke nebeneinander angeordnete Aufnahmen für jeweils eines der Stückgüter aufweist, sind als Mittel zum Beladen vorzugsweise mindestens zwei Schubelemente vorgesehen, die jeweils an einer Kante und/oder Oberfläche des Stückgutes zur Anlage bringbar sind. Die Schubelemente sind vorzugsweise derart ausgerichtet, dass sie nach dem Transport der Stückgüter aus der Entladeposition in Richtung der Absetzposition die Stückgüter in eine Aufnahme des Gliederbandförderers verschieben, die sich in einer der Absetzpositionen befindet.

Um mit nur einer Hubbewegung sowohl eines der Stückgüter von dem ersten Fördermittel zu entladen und das zweite Fördermittel mit mindestens zwei Stückgütern zu beladen, sind sowohl die Mittel zum Entladen als auch die Mittel zum Beladen der Handhabungseinrichtung vorzugsweise an einem einachsigen Positioniersystem angeordnet.

Der Quertransport der Stückgüter aus der Entladeposition in Richtung der Absetzpositionen erfolgt vorzugsweise mittels eines aus der Entladeposition in Richtung der Absetzpositionen verschieblichen Linearschlittens, an dem mindestens zwei in Richtung der Förderstrecke versetzt zueinander angeordnete Halterungen zur Aufnahme der Stückgüter angeordnet sind. Die Halterungen erfassen insbesondere die äußeren Kanten der halboffenen Packungsbehälter derart, dass die Packungsbehälter mittels des Abstreifers in vertikaler Richtung in die Halterung einschiebbar und mittels der Schubelemente in vertikaler Richtung aus den Halterungen ausschiebbar sind.

Jede der Halterungen des Linearschlittens ist durch Verschieben des Linearschlittens in horizontaler Richtung wahlweise in die Entladeposition bringbar oder fluchtend zu einer der Absetzpositionen ausrichtbar. In der Entladeposition kann der Abstreifer den Packungsbehälter von der sich nach unten erstreckenden Aufnahme des stillstehenden Transportrades in eine der beiden Halterungen entladen, die sich in der Entladeposition befindet. Durch anschließenden Quertransport der Halterungen mittels des verschieblichen Linearschlittens in Richtung einer der Absetzpositionen lässt sich die mit dem Packungsbehälter bestückte Halterung fluchtend zu einer der Absetzpositionen ausrichten, um das zweite stillstehende Fördermittel zu beladen. Hierzu bewegt sich das Schubelement der Handhabungseinrichtung in vertikaler Richtung und schiebt dabei den Packungsmantel aus der Halterung in vertikaler Richtung in eine Aufnahme des Gliederbandförderers, die sich in einer Absetzposition befindet.

Sofern die Halterungen zur Aufnahme der Stückgüter drehbar an dem Linearschlitten gelagert sind, lässt sich die Verschiebung des Linearschlittens sowie die Drehung der Halterungen miteinander verbinden, wenn jede Halterung über ein Koppelgestänge mit dem Gestell der Handhabungseinrichtung bzw. dem Maschinengestell verbunden ist, welches durch Verschieben des Linearschlittens zugleich eine Drehung der Halterungen bewirkt.

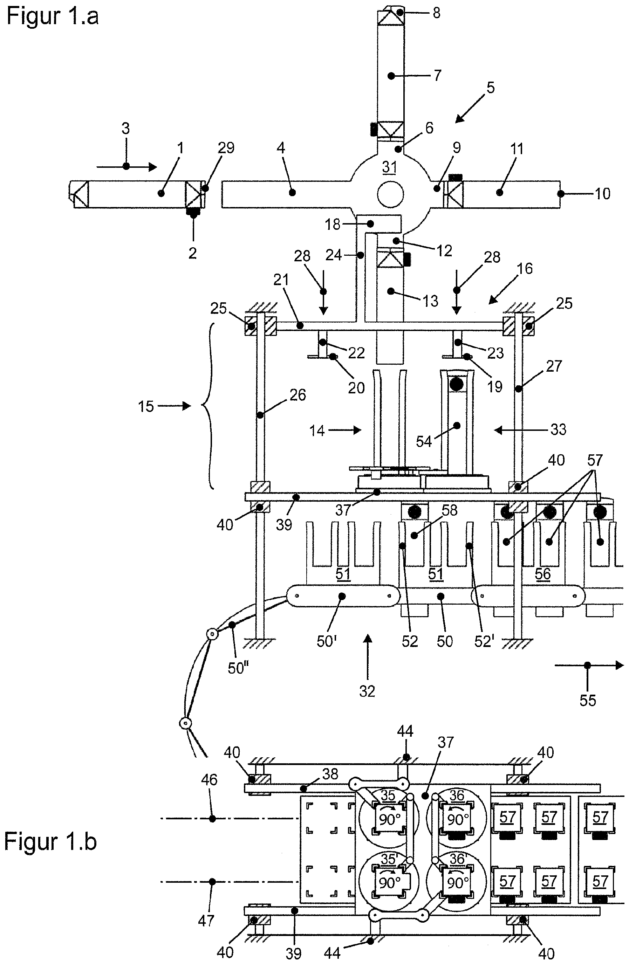

Nachfolgend werden das erfindungsgemäße Verfahren und die Vorrichtung zum getakteten Fördern näher erläutert. Dabei zeigen die
- **Figuren 1a - 6b**: die Handhabung der Packungsbehälter mittels einer Handhabungseinrichtung zwischen einem ersten Fördermittel und einem zweiten Fördermittel in sechs Schritten.

Figur 1a zeigt einen aufgerichteten Packungsmantel (1), der bereits mit einer wiederverschließbaren Öffnungshilfe (2) versehen ist. Der Packungsmantel (1) zur Herstellung eines Packungsbehälters wird in Richtung des Pfeils (3) auf eine sich radial nach außen erstreckende Aufnahme (4) eines ersten Fördermittels in Form eines Transportrades (5) geschoben. Auf einer zweiten, im Uhrzeigersinn benachbarten Aufnahme (6) befindet sich ein Packungsmantel (7), aus dessen über die Aufnahme (6) überstehenden freien Ende (8) der Packungsboden gebildet wird. Auf der dritten Aufnahme (9) befindet sich ein Packungsbehälter (11) mit geschlossenem Boden (10). Auf der vierten, senkrecht nach unten weisenden Aufnahme (12) befindet sich ein Packungsbehälter (13) in aufrechter Stellung zum Entladen von dem Transportrad (5) in eine erste Halterung (14) einer Handhabungseinrichtung (15). Die Handhabungseinrichtung (15) ist zwischen einem ersten Abschnitt einer Förderstrecke (46, 47) entlang des Transportrades (5) und einem zweiten Abschnitt der Förderstrecke (46, 47) entlang eines zweiten Fördermittels in Form eines Gliederbandförderers (32) angeordnet.

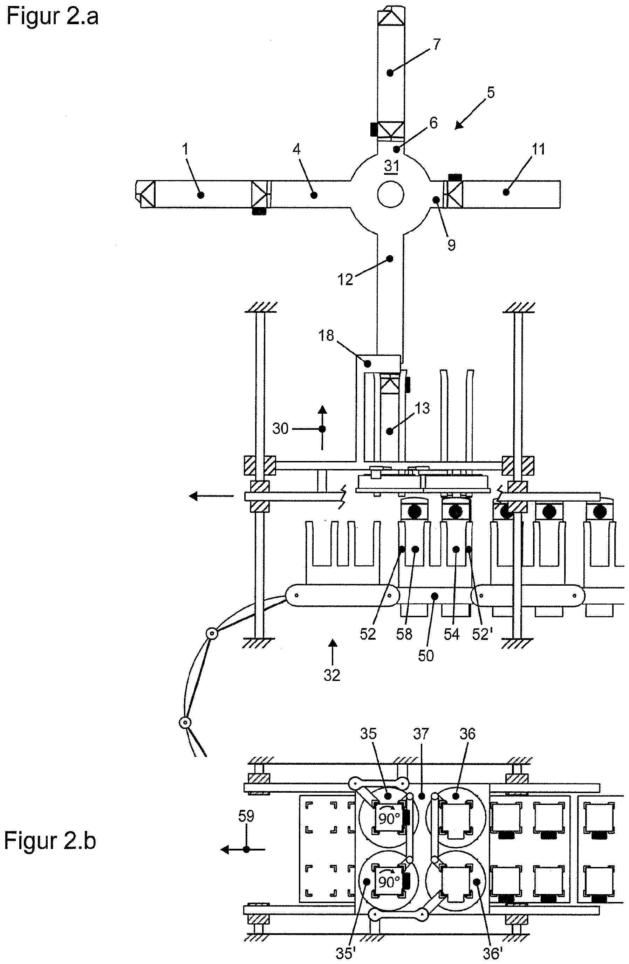

Ein einachsiges Positioniersystem (16) der Handhabungseinrichtung (15) weist eine Querstange (21) auf, die an beiden Enden mit Hilfe von Buchsen (25) auf einer senkrechten linken und einer rechten Führungsstange (26 bzw. 27) in Richtung des Pfeils (28) abwärts und in Richtung des Pfeils (30) (vgl. Figur 2a) aufwärts in eine Ausgangstellung verschiebbar ist. Von der Querstange (21) erstreckt sich ein Abstreifer (18) senkrecht nach oben. Links und rechts von dem Abstreifer (18) erstrecken sich von der Querstange (21) jeweils ein Schubelement (19, 20) senkrecht nach unten. Der Abstreifer (18) dient dem Zweck, den Packungsbehälter (13) von der nach unten weisenden Aufnahme (12) abzustreifen und in die Halterung (14, 33) einzuschieben, die sich in einer Entladeposition befindet. Der Abstreifer (18) liegt ununterbrochen und dabei federnd an den Seiten der jeweiligen Aufnahmen (4, 6, 9, 12) an, damit der sich jeweils in der unteren Stellung des Transportrades (5) befindliche Packungsbehälter sicher an seinem oberen Packungsrand (29) erfasst und abgestreift werden kann. Damit eine einwandfreie Anlage des Abstreifers (18) sichergestellt ist, bilden die Seiten der Aufnahmen (4, 6, 9, 12) und das Transportradmittelteil (31) des Transportrades (5) eine durchgehende Anlagefläche.

Die Handhabungseinrichtung (15) weist darüber hinaus einen als Lineartisch ausgeführten Linearschlitten (37) zum Transport der Packungsbehälter aus der Entladeposition in Richtung der beiden Absetzpositionen auf, die sich unterhalb der Schubelemente (19, 20) auf dem zweiten Fördermittel, dem Gliederbandförderer (32) befinden. Der Linearschlitten (37) wird von zwei waagerechten Führungsstangen (38, 39), die in Buchsen (40) in Richtung des Gliederbandförderers (32) gleiten, mit einem nicht dargestellten Antrieb hin und her bewegt. Auf dem Linearschlitten (37) ist die erste Halterung (14) und eine zweite, in Richtung der Förderstrecke (46, 47) versetzte Halterung (33) für die Packungsbehälter angeordnet, die jeweils vier Haltewinkel (34) zum Erfassen der Packungskanten der Packungsbehälter aufweisen. Die Halterungen (14, 33) sind jeweils auf einem Drehtisch (35, 36) auf dem Linearschlitten (37) jeweils um 90 ° hin und her drehbar angeordnet.

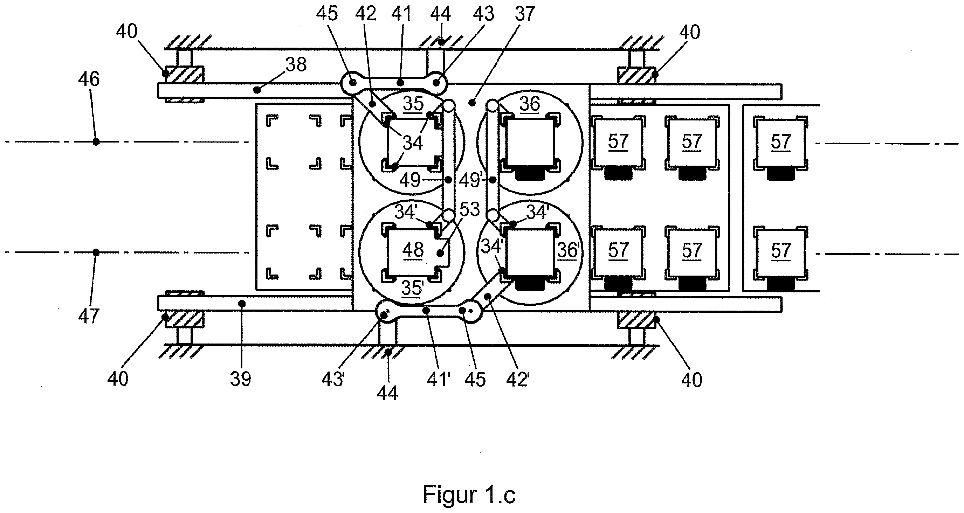

Figur 1b zeigt eine in Figur 1c vergrößert dargestellte Draufsicht auf die Handhabungseinrichtung (15) aus der zu erkennen ist, dass die dargestellte Vorrichtung zwei parallel verlaufende Förderstrecken (46, 47) aufweist, wobei die Anordnung und Taktung der ersten und zweiten Fördermittel in beiden Förderstrecken (46, 47) übereinstimmt. Die ersten Fördermittel, die beiden Transporträder (5) für jeden ersten Abschnitt der Förderstrecken (46, 47) sind auf einer gemeinsamen Antriebswelle angeordnet. Hierdurch wird der Antriebsaufwand und Bauraum reduziert sowie eine synchrone Betriebsweise der ersten Fördermittel sichergestellt. Selbstverständlich liegt es im Rahmen der Erfindung, als erstes Fördermittel für jede Förderstrecke ein Transportrad mit eigenem Antrieb vorzusehen.

Als zweites Fördermittel für die beiden Förderstrecken (46, 47) kommt der Gliederbandförderer (32) zu Einsatz. Um beide Förderstrecken (46, 47) mit nur einem Gliederbandförderer (32) betreiben zu können, trägt jedes Kettenglied (50, 50', 50") des Gliederbandförderers (32) jeweils eine Zelleneinheit (51 bzw. 51'), die vier einzelne Zellen (52, 52', 52") aufweist. Die Zellen (52, 52', 52") sind in Richtung der in dem zweiten Abschnitt geradlinig verlaufenden Förderstrecken (46, 47) nebeneinander als Aufnahmen für jeweils einen Packungsbehälter angeordnet. In die Zellen (52, 52', 52") werden die Packungsbehälter in den beiden Absetzpositionen jeder Förderstrecke (46, 47) eingeschoben. Selbstverständlich liegt es im Rahmen der Erfindung als zweites Fördermittel für jede Förderstrecke (46, 47) einen separaten Förderer vorzusehen.

In dem dargestellten Ausführungsbeispiel ist auch nur eine Handhabungseinrichtung (15) zwischen den beiden ersten Abschnitten der beiden Förderstrecken (46, 47) und den beiden zweiten Abschnitten der beiden Förderstrecken (46, 47) angeordnet. Um beide Förderstrecken (46, 47) mit nur einer Handhabungseinrichtung (15) betreiben zu können, sind auf dem Linearschlitten (37) zusätzlich zu den versetzt in Richtung des zweiten Abschnitts der ersten Förderstrecke (46) angeordneten Drehtischen (35, 36) zwei weitere Drehtische (35', 36') versetzt in Richtung des zweiten Abschnitts der zweiten Förderstrecke (47) angeordnet.

Die Drehbewegung des Drehtisches (35) wird dadurch erreicht, dass dieser bei der Verschiebung des Linearschlittens (37) über ein Koppelgestänge verdreht wird. Dazu ist ein Gelenk (43) der Koppelstange (41) an dem Maschinengestell (44) ortsfest angeordnet, während das andere Gelenk (45) die Koppelstange (41) gelenkig mit dem Drehtisch (35) über die Koppelstange (42) verbindet. Weiterhin ist die Koppelstange (42) mit einer der vier auf dem Drehtisch (35) angeordneten Haltewinkel (34) starr verbunden. Der Drehantrieb des zu dem Drehtisch (35) benachbarten Drehtisches (36) auf der Förderstrecke (46) wird durch eine Koppelstange (49') bewerkstelligt, die nach Art eines Parallelgetriebes mit einem Haltewinkel (34') an dem Drehtisch (36') und einem Haltewinkel (34) an dem Drehtisch (36) in der parallelen Förderstrecke (47) gelenkig verbunden ist.

Der Antrieb des Drehtisches (36') ist spiegelbildlich zu dem Antrieb des Drehtisches (35) aufgebaut: Die Drehbewegung des Drehtisches (36') wird dadurch erreicht, dass dieser bei der Verschiebung des Linearschlittens (37) über ein Koppelgestänge verdreht wird. Dazu ist ein Gelenk (43') der Koppelstange (41') an dem Maschinengestell (44) ortsfest angeordnet, während das andere Gelenk (45') die Koppelstange (41') gelenkig mit dem Drehtisch (36') über die Koppelstange (42') verbindet. Weiterhin ist die Koppelstange (42') mit einer der vier auf dem Drehtisch (36') angeordneten Haltewinkel (34) starr verbunden. Der Drehantrieb des zu dem Drehtisch (36') benachbarten Drehtisches (35') auf der Förderstrecke (47) wird durch eine Koppelstange (49) bewerkstelligt, die nach Art eines Parallelgetriebes mit einem Haltewinkel (34') an dem Drehtisch (35') und einem Haltewinkel (34) an dem Drehtisch (35) in der parallelen Förderstrecke (46) gelenkig verbunden ist.

Jeder Drehtisch (35, 35', 36, 36') weist mittig einen durchgehenden quadratischen Durchbruch (48) auf, der im Wesentlichen dem rechteckigen Querschnitt des zu transportierenden Packungsbehälters entspricht. Es ist erkennbar, dass jeder Durchbruch (48) an einer Seite eine zusätzliche rechteckige Ausnehmung (53) aufweist.

Im Nachfolgenden wird die Verfahrensweise der zuvor beschriebenen Vorrichtung anhand der Figuren 1a bis 6b erläutert:

Aufgrund der längeren Taktzeit für das Befüllen der Packungsbehälter in dem zweiten Abschnitt jeder Förderstrecke ggü. der Taktzeit für das Herstellen des Packungsbodens in dem ersten Abschnitt jeder Förderstrecke werden, während des gleichzeitigen Abfüllens von zwei Packungsbehältern in einem Takt des Gliederbandförderers (32), zwei Packungsböden in zwei Takten des Transportrades (5) in jeder Förderstrecke (46, 47) hergestellt. Folglich überschneidet sich ein Stillstandsintervall des Gliederbadförderers (32) zum Abfüllen mit zwei Stillstandsintervallen des Transportrades (5) zum Bilden des Packungsbodens und Abstreifen des Packungsbehälters (13) von dem Transportrad (5). Die Handhabungseinrichtung (15) gleicht die Unterschiede der Taktung zwischen dem Transportrad (5) und dem Gliederbandförderer (32) aus.

In Figur 1a ist folgende Situation dargestellt: In einem vorangegangenen Takt des Gliederförderers (32) wurde die linke Zelle (52) der Zelleneinheit (51) mit einem Packungsbehälter (58) beladen. In Förderrichtung (55) nach rechts befinden sich in der benachbarten Zelleneinheit (56) ebenfalls Packungsbehälter (57). Weiterhin befindet sich in der Handhabungseinrichtung (15), und zwar in der rechten Halterung (33) ein Packungsbehälter (54), der in dem vorangegangen Takt des Transportrades (5) von der Aufnahme (4) abgestreift worden ist, die sich nun in der linken waagerechten Stellung befindet, um den nächsten Packungsmantel (1) aufzunehmen. Nach dem Abstreifen in dem vorangegangen Takt des Transportrades (5) wurde der von der Halterung (33) aufgenommene Packungsbehälter (54) mit Hilfe des Linearschlittens (37) aus der Entladeposition in die in Figur 1a dargestellte Position verschoben, wodurch die rechten Drehtische (36, 36') über den Koppeltrieb (41', 42', 49') um 90 ° im Uhrzeigersinn gedreht wurden (vgl. Figur 1 c).

Aus Figur 1a sind im Transportrad (5) die in Förderrichtung ausgerichteten Öffnungshilfen (2) erkennbar. Aus technischen Gründen ist das Einbringen und Verschweißen der Öffnungshilfe (2) in einen Packungsmantel (1) nur in dieser Ausrichtung möglich. Da der Packungskopf jedes Packungsbehälters nach dem Befüllen im Durchlauf verschweißt wird, muss jeder Packungsbehälter vor dem Einschieben in eine der Zellen (52, 52') des Gliederbandförderers (32) mit Hilfe der Drehtische (35, 35', 36, 36') um 90 ° gedreht werden, wodurch die Öffnungshilfen (2) quer zur Förderrichtung ausgerichtet werden.

Der in Figur 1a dargestellte nächste Schritt besteht nun darin, dass gleichzeitig mit dem Abstreifen des Packungsbehälters (13) mittels des Abstreifers (18) von der Aufnahme (12) in die in der Entladeposition befindliche Halterung (14) mit dem rechten Schiebeelement (19) der Packungsbehälter (54) aus der Halterung (33) in die darunterliegende Zelle (52') eingeschoben wird, die sich in der rechten der beiden Absetzpositionen befindet. In Figur 2a ist erkennbar, dass nun die Zellen (52, 52') auf dem Kettenglied (50) komplett mit Packungsbehältern (58, 54) beladen sind. Während diesem Beladen wurde auch der Packungsmantel (1) vollständig auf die leere Aufnahme (4) des Transportrades (5) geschoben.

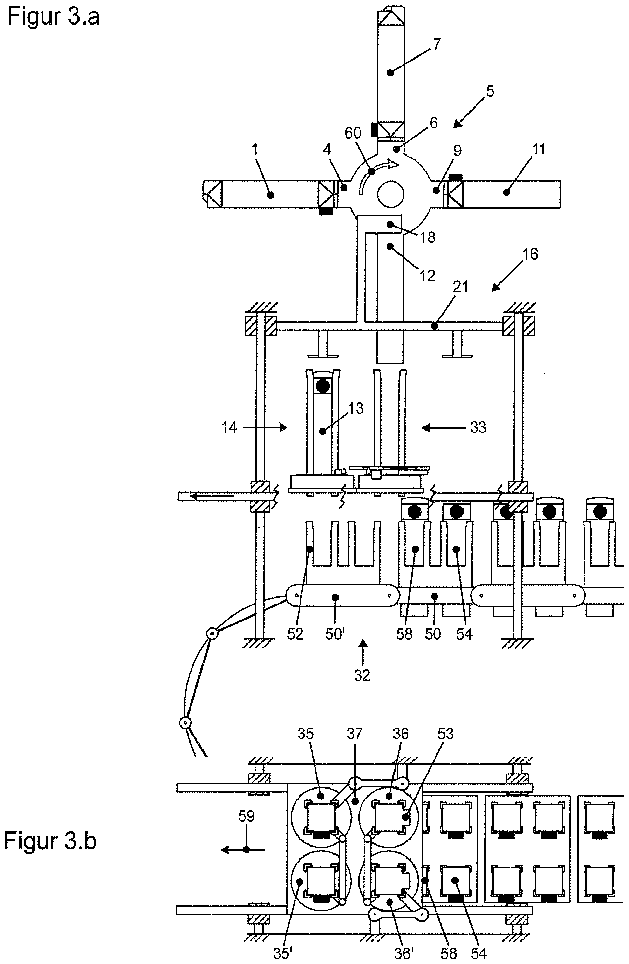

In Figur 2b sind die Drehrichtungen der Drehtische (35, 35') um 90 ° im Uhrzeigersinn und der Drehtische (36, 36') um 90 ° entgegen dem Uhrzeigersinn dargestellt. Die Drehung erfolgt, sobald der Linearschlitten (37) nach links in Richtung des Pfeils (59) in die in Figur 3a dargestellte Position bewegt wird.

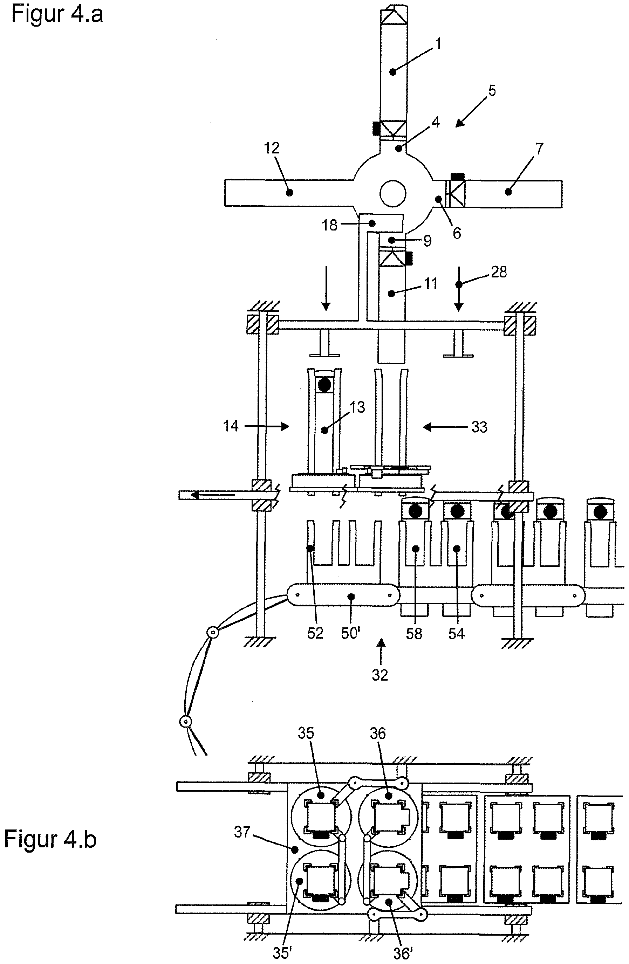

In Figur 3a hat sich der beladene Gliederbandförderer (32) noch nicht bewegt, da in der Abfüllmaschine noch der Füllvorgang der Packungsbehälter läuft. Die Querstange (21) des Positioniersystems (16) wurde aus der in Figur 2a dargestellten unteren Position in Richtung des Pfeils (30) nach oben in die in Figur 3a dargestellte Ausgangsstellung gefahren, damit das Transportrad (5) mit der Aufnahme (9) um 90 ° in die untere Position in Richtung des Drehpfeil (60) drehen kann. Nach der Drehung befindet sich der nächste Packungsbehälter (11) in der in Figur 4a dargestellten Position, in der die Aufnahme (9) nach unten weist, um anschließend von der Aufnahme (9) abgestreift zu werden.

Danach wird der Linearschlitten (37) aus der in den Figuren 2a, b dargestellten rechten Position in Richtung des Pfeils (59) in die linke, in den Figuren 3a, b dargestellte Position verschoben. Während der Linearschlittenbewegung wurden die Drehtische (35, 35' und 36, 36') jeweils um 90 ° nach rechts bzw. links gedreht, wie dies aus Figur 3b ersichtlich ist.

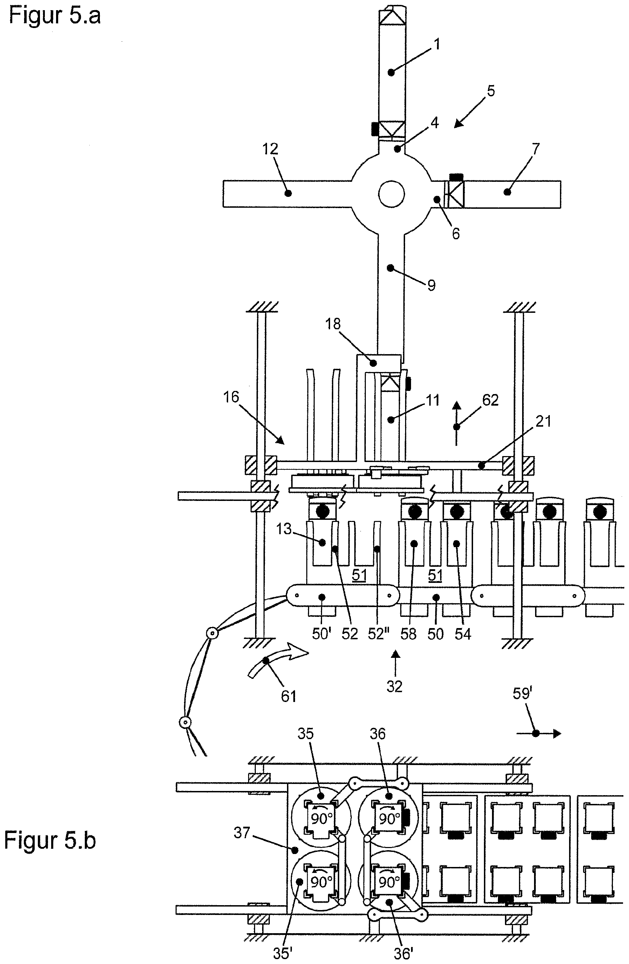

Durch die Verschiebung des Linearschlittens (37) befindet sich die linke Halterung (14) jetzt über der linken Zelle (52) des linken Kettengliedes (50'), die sich in der linken der beiden Absetzpositionen befindet. Die Halterung (14) wurde um 90 ° im Uhrzeigersinn gedreht. Das Transportrad (5) wird in Richtung des Drehpfeils (60) um 90 ° im Uhrzeigersinn gedreht, damit der nächste Packungsmantel (1) von der Aufnahme (9) abgestreift werden kann. Diese Drehung des Transportrades (5) ist in Figur 4a vollzogen. Jetzt kann das gleichzeitige Abstreifen des Packungsbehälters (11) von der Aufnahme (9) in die Halterung (33) und das Ausschieben des Packungsbehälters (13) aus der Aufnahme (14) in die Zelle (52) in Richtung des Pfeils (28) erfolgen. Die vollzogene senkrechte Verschiebung der Packungsbehälter (11, 13) ist in Figur 5a dargestellt.

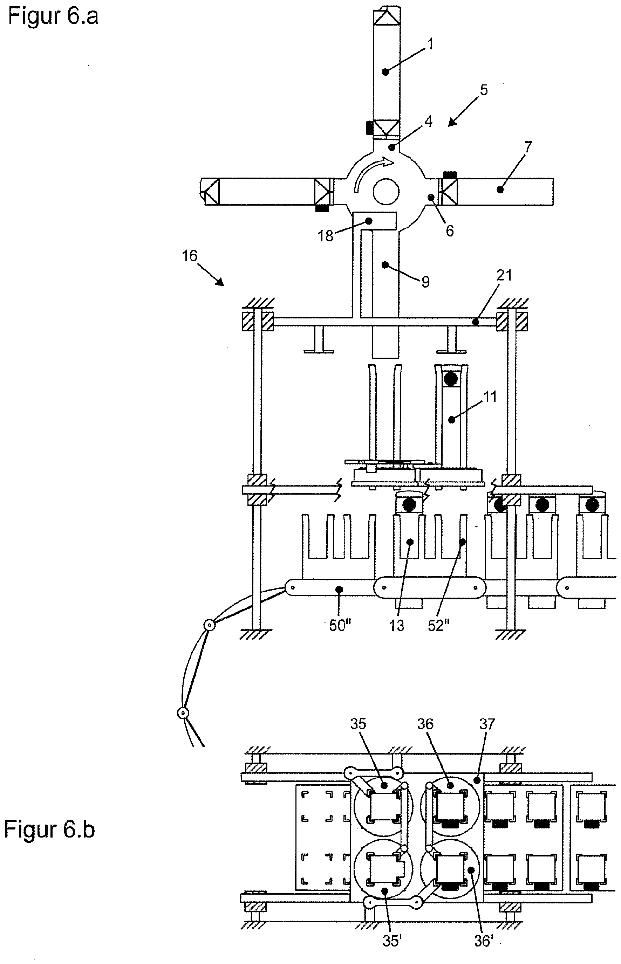

Während des zuvor beschriebenen Beladens der Zelleneinheiten (51) mit zwei Packungsbehältern (13, 54) je Förderstrecke (46, 47) wurde der Füllvorgang abgeschlossen. Nun wird der Gliederbandförderer (32) in einem Förderintervall in Richtung des Drehpfeils (61) um die Länge eines Kettengliedes (50', 50) weitergeschaltet und die Querstange (21) des Positioniersystems (16) aus der in Figur 5a unteren Position in Richtung des Pfeils (62) in die in Figur 6a dargestellte Ausgangsposition verfahren, so dass die Zelle (52") nunmehr mit dem Packungsbehälter (11) beladen werden kann. Nach dem Verfahren der Querstange (21) in die Ausgangstellung wird der Linearschlitten (37) aus der linken, in Figur 5b dargestellten Position nach rechts, in Richtung des Pfeils (59') in die in Figur 6a dargestellte Position verschoben.

Das Transportrad (5) dreht um 90 ° im Uhrzeigersinn weiter, wodurch die Aufnahme (6) in eine nach unten weisende Stellung oberhalb der Entladeposition für den Packungsbehälter (7) gelangt. Somit befindet sich die Vorrichtung zum getakteten Fördern wieder in der Ausgangssituation, die in Figuren 1a, b dargestellt ist.

Zu diesem Zeitpunkt ist ein Takt des getaktet betriebenen Gliederbandförderers (32) verstrichen, wobei in dem Stillstandsintervall des Taktes zwei Packungsbehälter in jeder Förderstrecke (46, 47) befüllt wurden. Während des Stillstandsintervalls des Gliederbandförderers (32) wurden zwei Packungsbehälter (13, 11) je Förderstrecke (46, 47) von dem Transportrad (5) mittels der Handhabungseinrichtung (15) entladen und der Gliederbandförderer (32) mit den beiden Packungsbehältern (13, 11) beladen. Folglich überlappen sich bei dem Betrieb der erfindungemäßen Vorrichtung zwei Stillstandsintervalle des Transportrades (5), in denen jeweils ein Packungsbehälter (13, 11) entladen wird, mit einem Stillstandsintervall des Gliederbandförderers (32).

**Bezugszeichenliste**

| **Nr.** | **Bezeichnung** | **Nr.** | **Bezeichnung** |
|---|---|---|---|
| 1 | Packungsmantel | 32 | Gliederbandförderer |
| 2 | Öffnungshilfe | 33 | zweite Halterung |
| 3 | Pfeil | 34 | Haltewinkel |
| 4 | erste Aufnahme | 35 | linker Drehtisch |
| 5 | Transportrad | 36 | rechter Drehtisch |
| 6 | zweite Aufnahme | 37 | Linearschlitten |
| 7 | Packungsmantel | 38 | Führungsstange |
| 8 | freies Ende | 39 | Führungsstange |
| 9 | dritte Aufnahme | 40 | Buchsen |
| 10 | Boden | 41 | Koppelstange |
| 11 | Packungsbehälter | 42 | Koppelstange |
| 12 | vierte Aufnahme | 43 | Gelenk |
| 13 | Packungsbehälter | 44 | Maschinengestell |
| 14 | erste Halterung | 45 | Gelenk |
| 15 | Handhabungseinrichtung | 46 | Förderstrecke |
| 16 | Positioniersystem | 47 | Förderstrecke |
| 17 | Boden | 48 | Durchbruch |
| 18 | Abstreifer | 49 | Koppelstange |
| 19 | Schubelement | 50 | Kettenglieder |
| 20 | Schubelement | 51 | Zelleneinheit |
| 21 | Querstange | 52 | Zelle |
| 22 | senkrechte Stange | 53 | Ausnehmung |
| 23 | senkrechte Stange | 54 | Packungsbehälter |
| 24 | senkrechte Stange | 55 | Förderrichtung |
| 25 | Buchsen | 56 | Zelleneinheit |
| 26 | senkrechte linke Führungsstange | 57 | Packungsbehälter |
| 27 | senkrechte rechte Führungsstange | 58 | Packungsbehälter |
| 28 | Pfeil | 59 | Pfeil |
| 29 | Packungsrand | 60 | Drehpfeil |
| 30 | Pfeil | 61 | Drehpfeil |
| 31 | Transportradmittelteil | 62 | Pfeil |

## Patentansprüche

1. Verfahren zum getakteten Fördern von Stückgütern in einer Abfüllmaschine für fließfähige Produkte entlang einer Förderstrecke (46, 47) mit einem ersten und einem zweiten Abschnitt, umfassend die Schritte
- Fördern der Stückguter in dem ersten Abschnitt mit einem ersten Fördermittel (5) und Fördern der Stückguter in dem zweiten Abschnitt mit einem zweiten Fördermittel (32),
- Entladen der Stückgüter von dem ersten Fördermittel (5) und Beladen des zweiten Fördermittels (32) mit den Stückgütern,
- Betreiben des ersten Fördermittels (5) mit einer ersten Taktung, deren Takte jeweils ein Stillstandsintervall und ein Förderintervall umfassen,
**gekennzeichnet durch die weiteren Schritte,**
- Betreiben des zweiten Fördermittels (32) mit einer von der ersten Taktung abweichenden zweiten Taktung, deren Takte jeweils ein Stillstandsintervall und ein Förderintervall umfassen, wobei sich jedes Stillstandsintervall der zweiten Taktung mit mindestens zwei Stillstandsintervallen der ersten Taktung zeitlich überschneidet,
- Entladen jeweils eines der Stückgüter von dem ersten Fördermittel (5) während eines Stillstandsintervalls der ersten Taktung mittels einer zwischen dem ersten und dem zweiten Abschnitt der Förderstrecke angeordneten Handhabungseinrichtung (15) und
- Beladen des zweiten Fördermittels (32) während eines Stillstandsintervalls der zweiten Taktung mit sämtlichen während dieses Stillstandsintervalls von dem ersten Fördermittel (5) entladenen Stückgütern mittels der Handhabungseinrichtung (15).

2. Verfahren nach Anspruch 1, **dadurch gekennzeichnet, dass** das Beladen des zweiten Fördermittels (32) mit den Stückgütern an mehreren in Richtung der Förderstrecke versetzt zueinander angeordneten Absetzpositionen erfolgt.

3. Verfahren nach Anspruch 2, **dadurch gekennzeichnet, dass** das Entladen jeweils eines der Stückgüter von dem ersten Fördermittel (5) in eine Entladeposition erfolgt, die sich zwischen zwei Absetzpositionen befindet.

4. Verfahren nach Anspruch 3, **dadurch gekennzeichnet, dass** jedes Stückgut nach dem Entladen von dem ersten Fördermittel (5) und vor dem Beladen des zweiten Fördermittels (32) aus der Entladeposition in Richtung einer der Absetzpositionen transportiert wird.

5. Verfahren nach einem der Ansprüche 1 bis 4, **dadurch gekennzeichnet, dass** jedes Stückgut nach dem Entladen von dem ersten Fördermittel (5) und vor dem Beladen des zweiten Fördermittels (32) um eine Längsachse des Stückgutes gedreht wird.

6. Verfahren nach Anspruch 4 und 5, **dadurch gekennzeichnet, dass** jedes Stückgutes während des Transports in eine der Absetzpositionen verdreht wird.

7. Verfahren nach einem der Ansprüche 1 bis 6, **dadurch gekennzeichnet, dass** die Stückgüter in der Abfüllmaschine entlang mehrerer, parallel zueinander angeordneter Förderstrecken (46, 47) getaktet gefördert werden, wobei die Anordnung und Taktung der ersten und zweiten Fördermittel (5, 32) und die Anordnung jeder Handhabungseinrichtung (15) in sämtlichen Förderstrecken (46, 47) übereinstimmt.

8. Vorrichtung zum getakteten Fördern von Stückgütern in einer Abfüllmaschine für fließfähige Produkte entlang mindestens einer Förderstrecke (46, 47) mit einem ersten und einem zweiten Abschnitt, umfassend ein erstes Fördermittel (5) mit einem getakteten Antrieb zum Fördern der Stückguter in dem ersten Abschnitt und ein zweites Fördermittel (32) mit einem getakteten Antrieb zum Fördern der Stückguter in dem zweiten Abschnitt,
**dadurch gekennzeichnet, dass**
- zwischen dem ersten und dem zweiten Abschnitt der Förderstrecke (46, 47) eine Handhabungseinrichtung (15) angeordnet ist,
- die Handhabungseinrichtung (15) Mittel zum Entladen der Stückgüter von dem ersten Fördermittel in eine Entladeposition aufweist, die sich im Abstand zu zwei in Richtung der Förderstrecke versetzt zueinander angeordneten Absetzpositionen für die Stückgüter auf dem zweiten Fördermittel (32) befindet,
- die Handhabungseinrichtung (15) Mittel zum Transport der Stückgüter aus der Entladeposition in Richtung der Absetzpositionen aufweist und
- die Handhabungseinrichtung (15) Mittel zum Beladen des zweiten Fördermittels mit den Stückgütern an den in Richtung der Förderstrecke versetzt zueinander angeordneten Absetzpositionen aufweist.

9. Vorrichtung nach Anspruch 8, **dadurch gekennzeichnet, dass** sich die Entladeposition zwischen zwei in Richtung der Förderstrecke (46, 47) versetzt zueinander angeordneten Absetzpositionen befindet.

10. Vorrichtung nach Anspruch 8 oder 9, **dadurch gekennzeichnet, dass** das erste Fördermittel ein Transportrad (5) umfasst, das mehrere sich radial nach außen erstreckende, parallele Aufnahmen (4, 7, 9, 12) für jeweils eines der Stückgüter aufweist.

11. Vorrichtung nach einem der Ansprüche 8 bis 10, **dadurch gekennzeichnet, dass** das zweite Fördermittel einen umlaufenden Gliederbandförderer (32) umfasst, der in Richtung der Förderstrecke (46, 47) nebeneinander angeordnete Aufnahmen für jeweils eines der Stückgüter aufweist.

12. Vorrichtung nach einem der Ansprüche 8 bis 11, **dadurch gekennzeichnet, dass**
- das erste Fördermittel (5) mit einer ersten Taktung betreibbar ist, deren Takte jeweils ein Stillstandsintervall und ein Förderintervall umfassen,
- und das zweite Fördermittel (32) mit einer von der ersten Taktung abweichenden zweiten Taktung betreibbar ist, deren Takte jeweils ein Stillstandsintervall und ein Förderintervall umfassen, wobei sich jedes Stillstandsintervall der zweiten Taktung mit mindestens zwei Stillstandsintervallen der ersten Taktung zeitlich überschneidet.

13. Vorrichtung nach einem der Ansprüche 8 bis 12, **dadurch gekennzeichnet, dass** die Mittel zum Entladen einen Abstreifer (18) aufweisen, der an einer Kante und /oder Oberfläche des Stückgutes zur Anlage bringbar ist.

14. Vorrichtung nach einem der Ansprüche 8 bis 13, **dadurch gekennzeichnet, dass** die Mittel zum Beladen mindestens zwei Schubelemente (19, 20) aufweisen, die jeweils an einer Kante und /oder Oberfläche des Stückgutes zur Anlage bringbar sind.

15. Vorrichtung nach einem der Ansprüche 8 bis 14, **dadurch gekennzeichnet, dass** sowohl die Mittel zum Entladen als auch die Mittel zum Beladen an einem einachsigen Positioniersystem (16) angeordnet sind.

16. Vorrichtung nach einem der Ansprüche 8 bis 15, **dadurch gekennzeichnet, dass** die Mittel zum Transport einen aus der Entladeposition in Richtung der Absetzpositionen verschieblichen Linearschlitten (37) aufweisen, an dem mindestens zwei in Richtung der Förderstrecke versetzt zueinander angeordnete Halterungen (14, 33) zur Aufnahme der Stückgüter angeordnet sind.

17. Vorrichtung nach Anspruch 16, **dadurch gekennzeichnet, dass** die Halterungen (14, 33) zur Aufnahme der Stückgüter drehbar an dem Linearschlitten (37) gelagert sind.

18. Vorrichtung nach Anspruch 17, **dadurch gekennzeichnet, dass** die Halterungen (14, 33) über ein Koppelgestänge mit dem Gestell der Handhabungseinrichtung verbunden sind, welches durch Verschieben des Linearschlittens (37) eine Drehung der Halterungen (14, 33) bewirkt.

19. Vorrichtung nach einem der Ansprüche 8 bis 18, **dadurch gekennzeichnet, dass** sie mehrere parallel verlaufende Förderstrecken (46, 47) mit einem ersten und einem zweiten Fördermittel (5, 32) aufweist, wobei die Anordnung und Taktung der ersten und zweiten Fördermittel und jeder Handhabungseinrichtung in sämtlichen Förderstrecken (46, 47) übereinstimmt.

20. Abfüllmaschine mit mehreren Vorrichtungen zum getakteten Fördern von Stückgütern nach einem oder mehreren der Ansprüche 8 bis 19.

## Claims

1. A method for the clocked conveyance of piece goods in a filling machine for flowable products along a conveying line (46, 47) with a first and a second section, comprising the steps of:
- conveying the piece goods in the first section by a first conveying means (5) and conveying the piece goods in the second section by a second conveying means (32),
- unloading the piece goods from the first conveying means (5) and loading the second conveying means (32) with the piece goods,
- operating the first conveying means (5) with a first timing, the steps of which each comprise an idle interval and a conveying interval,
**characterized by** the further steps,
- operating the second conveying means (32) with a second timing different from the first timing, the steps of which each comprise an idle interval and a conveying interval, wherein each idle interval of the second timing overlaps in time at least two idle intervals of the first timing,
- unloading one of the piece goods from the first conveying means (5) during an idle interval of the first timing by means of a handling device (15) arranged between the first and the second sections of the conveying line and
- loading the second conveying means (32) during an idle interval of the second timing with all of the piece goods unloaded from the first conveying means (5) during the idle interval of the second timing by means of the handling device (15).

2. The method according to claim 1, **characterized in that** the loading of the second conveying means (32) with the piece goods takes place at several set-down positions arranged with an offset from each other in the direction of the conveying line.

3. The method according to claim 2, **characterized in that** each one of the piece goods is unloaded from the first conveying means (5) into an unloading position located between two of the set-down positions.

4. The method according to claim 3, **characterized in that** after unloading from the first conveying means (5) and before loading of the second conveying means (32), each piece good is transported from the unloading position to one of the set-down positions.

5. The method according to one of claims 1 to 4, **characterized in that** after unloading from the first conveying means (5) and before loading of the second conveying means (32), each piece good is rotated about a longitudinal axis of the piece good.

6. The method according to claim 4 and 5, **characterized in that** each piece good is rotated during transport into one of the set-down positions.

7. The method according to any one of claims 1 to 6, **characterized in that** the piece goods are conveyed in a clocked manner in the filling machine along a plurality of parallel conveying lines (46, 47), wherein the arrangement and timing of the first and second conveying means (5, 32) and the arrangement of each handling device (15) are the same in all the conveying lines (46, 47).

8. A device for the clocked conveyance of piece goods in a filling machine for flowable products along at least one conveying line (46, 47) with a first section and a second section, comprising a first conveying means (5) with a clocked drive for conveying the piece goods in the first section and a second conveying means (32) with a clocked drive for conveying the piece goods in the second section,
**characterized in that**
- a handling device (15) is arranged between the first section and the second section of the conveying line (46, 47),
- the handling device (15) comprises means for unloading the piece goods from the first conveying means into an unloading position located at a distance from two set-down positions arranged offset with respect to one another in the direction of the conveying line for the piece goods on said second conveying means (32),
- the handling device (15) further comprises means for transporting the piece goods from the unloading position in the direction of the set-down positions, and
- the handling device (15) further comprises means for loading the second conveying means with the piece goods at the set-down positions arranged offset with respect to one other in the direction of the conveying line.

9. The device according to claim 8, **characterized in that** the unloading position is located between two set-down positions arranged offset with respect to one other in the direction of the conveying line (46, 47).

10. The device according to claim 8 or 9, **characterized in that** the first conveying means comprises a transport wheel (5) having several radially outwardly extending, parallel receptacles (4, 7, 9, 12) for respectively one of the piece goods.

11. The device according to any one of claims 8 to 10, **characterized in that** the second conveying means comprises a circulating link-belt conveyor (32) which has receptacles arranged next to each other in the direction of the conveying line (46, 47) for respectively one of the piece goods.

12. The device according to any one of claims 8 to 11, **characterized in that**
- the first conveying means (5) can be operated with a first timing, the steps of which each comprise an idle interval and a conveying interval,
- and the second conveying means (32) can be operated with a second timing different from the first timing, the steps of which each comprise an idle interval and a conveying interval, wherein each idle interval of the second timing overlaps in time with at least two idle intervals of the first timing.

13. The device according to any one of claims 8 to 12, **characterized in that** the means for unloading comprises a stripper (18) that can be brought to abut against an edge and/or a surface of the piece good.

14. The device according to any one of claims 8 to 13, **characterized in that** the means for loading comprises at least two pusher elements (19, 20), which can each be brought to abut against an edge and/or a surface of the piece good.

15. The device according to any one of claims 8 to 14, **characterized in that** both the means for unloading and the means for loading are arranged on a single-axis positioning system (16).

16. The device according to any one of claims 8 to 15, **characterized in that** the means for transporting comprises a linear slide (37) movable from the unloading position in the direction of the set-down positions, on which at least two holders (14, 33)are arranged offset with respect to one other in the direction of the conveying line for holding the piece goods.

17. The device according to claim 16, **characterized in that** the holders (14, 33) for holding the piece goods are mounted rotatably on the linear slide (37).

18. The device according to claim 17, **characterized in that** the holders (14, 33) are connected to the stand of the handling device by a coupling linkage, which causes the holders (14, 33) to rotate by displacement of the linear slide (37).

19. The device according to any one of claims 8 to 18, **characterized in that** it comprises a plurality of parallel conveying lines (46, 47) having a first and a second conveying means (5, 32), wherein the arrangement and timing of the first and second conveying means and each handling device are the same in all the conveying lines (46, 47).

20. A filling machine having a plurality of devices for the clocked conveyance of piece goods according to one or more of claims 8 to 19.

## Revendications

1. Procédé destiné au convoyage cadencé d'articles individuels dans une machine de remplissage de produits fluides le long d'un trajet de convoyage (46, 47) comportant un premier et un deuxième tronçons, comprenant les étapes,
- duconvoyage des articles individuels dans le premier tronçon à l'aide d'un premier moyen de convoyage (5) et le convoyage des articles individuels dans le deuxième tronçon, à l'aide d'un deuxième moyen de convoyage (32),
- du déchargement des articles individuels du premier moyen de convoyage (5) et du chargement du deuxième moyen de convoyage (32) avec les articles individuels,
- du fonctionnement du premier moyen de convoyage (5) à une première cadence, dont les cycles comprennent chacun un intervalle d'arrêt et un intervalle de convoyage,
**caractérisé par** les étapes supplémentaires,
- du fonctionnement du deuxième moyen de convoyage (32) à une deuxième cadence différente de la première cadence, dont les cycles comprennent chacun un intervalle d'arrêt et un intervalle de convoyage, chaque intervalle d'arrêt du deuxième cadencement se recoupant dans le temps avec au moins deux intervalles d'arrêt du premier cadencement,
- du déchargement de chaque fois l'un des articles individuels du premier moyen de convoyage (5) pendant un intervalle d'arrêt du premier cadencement au moyen d'un système de manipulation (15) placé entre le premier et le deuxième tronçons du trajet de convoyage,
- du chargement du deuxième moyen de convoyage (32) pendant un intervalle d'arrêt du deuxième cadencement avec l'ensemble des articles déchargés pendant cet intervalle d'arrêt du premier moyen de convoyage (5), au moyen du système de manipulation (15).

2. Procédé selon la revendication 1, **caractérisé en ce que** le chargement du deuxième moyen de convoyage (32) avec des articles individuels a lieu sur plusieurs positions de dépose placées en étant décalées les unes par rapport aux autres dans la direction du trajet de convoyage.

3. Procédé selon la revendication 2, **caractérisé en ce que** le déchargement de chaque fois l'un des articles individuels du premier moyen de convoyage (5) a lieu dans une position de déchargement qui se trouve entre deux positions de dépose.

4. Procédé selon la revendication 3, **caractérisé en ce qu'**après le déchargement du premier moyen de convoyage (5) et avant le chargement du deuxième moyen de convoyage (32), chaque article individuel est transporté de la position de déchargement dans la direction de l'une des positions de dépose.

5. Procédé selon l'une quelconque des revendications 1 à 4, **caractérisé en ce qu'**avant le déchargement du premier moyen de convoyage (5) et avant le chargement du deuxième moyen de convoyage (32), chaque article individuel est tourné autour d'un axe longitudinal de l'article individuel.

6. Procédé selon les revendications 4 et 5, **caractérisé en ce que** pendant le transport, chaque article individuel est retourné dans l'une des positions de dépose.

7. Procédé selon l'une quelconque des revendications 1 à 6, **caractérisé en ce que** dans la machine de remplissage, les articles individuels sont convoyés en cadence le long de plusieurs trajets de convoyage (46, 47) placés à la parallèle les uns des autres, l'agencement et le cadencement des premier et deuxième moyens de convoyage (5, 32) et l'agencement de chaque système de manipulation (15) concordant dans l'ensemble des trajets de convoyage (46, 47).

8. Dispositif destiné au convoyage cadencé d'articles individuels dans une machine de remplissage de produits fluides le long d'au moins un trajet de convoyage (46, 47) comportant un premier et un deuxième tronçons, comprenant un premier moyen de convoyage (5) avec un entraînement cadencé destiné à convoyer les articles individuels dans le premier tronçon et un deuxième moyen de convoyage (32) avec un entraînement cadencé destiné à convoyer les articles individuels dans le deuxième tronçon,
**caractérisé**
- **en ce qu'**entre le premier et le deuxième tronçons du trajet de convoyage (46, 47) est placé un système de manipulation (15),
- **en ce que** le système de manipulation (15) comporte des moyens pour le déchargement des articles individuels du premier moyen de convoyage dans une position de déchargement qui se trouve à un écart par rapport à deux positions de dépose des articles individuels sur le deuxième moyen de convoyage (32), placées en étant décalées l'une par rapport à l'autre dans la direction du trajet de convoyage,
- **en ce que** le système de manipulation (15) comporte des moyens pour le transport des articles individuels à partir de la position de déchargement en direction de la position de dépose et
- **en ce que** le système de manipulation (15) comporte des moyens pour le chargement du deuxième moyen de convoyage avec les articles individuels sur les positions de dépose placées en étant décalées les unes par rapport aux autres dans la direction du trajet de convoyage.

9. Dispositif selon la revendication 8, **caractérisé en ce que** les positions de déchargement se trouvent entre deux positions de dépose placées en étant décalées les unes par rapport aux autres dans la direction du trajet de convoyage (46, 47).

10. Dispositif selon la revendication 8 ou 9, **caractérisé en ce que** le premier moyen de convoyage comprend une roue de transport (5) qui comporte plusieurs logements (4, 7, 9, 12) parallèles, s'étendant en direction radiale vers l'extérieur, pour chaque fois l'un des articles individuels.

11. Dispositif selon l'une quelconque des revendications 8 à 10, **caractérisé en ce que** le deuxième moyen de convoyage comprend un convoyeur à bande articulée (32) qui comporte des logements placés côte à côte dans la direction de convoyage (46, 47) pour chaque fois l'un des articles individuels.

12. Dispositif selon l'une quelconque des revendications 8 à 11, **caractérisé en ce que**
- le premier moyen de convoyage (5) peut fonctionner avec un premier cadencement, dont les cycles comprennent chacun un intervalle d'arrêt et un intervalle de convoyage,
- et le deuxième moyen de convoyage (32) peut fonctionnement avec un deuxième cadencement, différent du premier cadencement, dont les cycles comprennent chacun un intervalle d'arrêt et un intervalle de convoyage, chaque intervalle d'arrêt du deuxième cadencement se recoupant dans le temps avec au moins deux intervalles d'arrêt du premier cadencement.

13. Dispositif selon l'une quelconque des revendications 8 à 12, **caractérisé en ce que** les moyens de déchargement comportent un dévêtisseur (18) qui peut être amené en appui sur une arête et/ou une surface de l'article individuel.

14. Dispositif selon l'une quelconque des revendications 8 à 13, **caractérisé en ce que** les moyens de chargement comportent au moins deux éléments de poussée (19, 20), qui peuvent être amenés chacun en appui sur une arête et/ou une surface de l'article individuel.

15. Dispositif selon l'une quelconque des revendications 8 à 14, **caractérisé en ce qu'**aussi bien les moyens de déchargement qu'également les moyens de chargement sont placés sur un système de positionnement (16) à un axe.

16. Dispositif selon l'une quelconque des revendications 8 à 15, **caractérisé en ce que** les moyens de transport comportent un chariot linéaire (37) déplaçable à partir de la position de déchargement en direction de la position de dépose, sur lequel sont placées au moins deux fixations (14, 33) placées en étant décalées l'une par rapport à l'autre, destinées à réceptionner les articles individuels.

17. Dispositif selon la revendication 16, **caractérisé en ce que** les fixations (14, 33) destinées à réceptionner les articles individuels sont logées en rotation sur le chariot linéaire (37).

18. Dispositif selon la revendication 17, **caractérisé en ce que** les fixations (14, 33) sont reliées avec le châssis du système de manipulation par l'intermédiaire d'une tringlerie d'accouplement, laquelle par déplacement du chariot linéaire (37) provoque une rotation des fixations (14, 33).

19. Dispositif selon l'une quelconque des revendications 8 à 18, **caractérisé en ce qu'**il comporte plusieurs trajets de convoyage (46, 47) avec un premier et un deuxième moyens de convoyage (5, 32), l'agencement et le cadencement des premier et deuxième moyens de convoyage et de chaque système de manipulation concordant dans l'ensemble des trajets de convoyage (46, 47).

20. Machine de remplissage comportant plusieurs dispositifs pour le convoyage cadencé d'articles individuels, selon l'une quelconque ou plusieurs des revendications 8 à 19.
